# EUROPEAN PATENT APPLICATION

(11) **EP 1 246 425 A1**
(43) Date of publication of application: **02.10.2002**
(21) Application number: 01303060.6
(22) Date of filing: 30.03.2001
(51) Int. Cl.: H04L 29/06

(54) **Packet switching networks**

(71) Applicant: BRITISH TELECOMMUNICATIONS public limited company, London EC1A 7AJ (GB)
(72) Inventor: The designation of the inventor has not yet been filed
(74) Representative: Semos, Robert Ernest Vickers

(57) **Abstract**

A method of establishing, as part of an end-to-end route between a calling user and a called user, a route between edge devices interfacing packet switching networks wherein an originating network controller uses a unique called user identifier, e.g. email address, to find out the next part of the end-to-end route and the corresponding edge device (ingress edge device), then requests that corresponding edge device to reserve an address for each of its interfaced networks and to notify the originating controller of those addresses. The originating controller sends the email address to the controller of the corresponding adjacent network, together with at least the address reserved by the edge device for use as a source address for the route across that adjacent network. That adjacent controller similarly reserves addresses at an egress edge device, arid the process repeats across any other intermediate networks until the called user is reached, and then the respective destination addresses for the respective routes across the intermediate networks are sent to the respective ingress edge devices via the respective controller of the adjacent upstream network.

## Description

The present invention relates to a method of establishing a route across a packet switching network from an ingress interface unit to an egress interface unit, also referred to as edge devices; and to a controller for such a packet switching network having such ingress and egress interface units; and to such interface units.

In accordance with a first aspect of the present invention there is provided an interface unit for use between first and second packet switching networks, the interface unit comprising means responsive to receipt of a first command by reserving for use respective first and second addresses from first and second available address pools respectively associated with the networks and means for sending a response message including the reserved first and second addresses.

The present invention, in all its aspects, is concerned with end-to-end routing across a plurality of networks, when one or both of the source and destination addresses are only locally unique but are not globally unique, and an end-to-end route is established in the form of individual routes across the source and destination networks and any intermediate networks. For this, an interface unit receives a packet addressed to the interface unit and replaces the source and destination addresses, which are associated with the network on the receiving side of that interface unit, by source and destination addresses associated with its own network, referred to as address translation. The interface unit is commanded by a network controller to reserve a pair of addresses for address translation, and receives from a network controller, which may be its own network controller or another network controller, a destination address to be associated with its network source address for forwarding received packets on a route to an aggress interface unit of its network.

Preferably, the interface unit further comprises means responsive to receipt of a second command containing a third address by storing that third address in association with one of said first and second addresses.

Preferably, the interface unit further comprises means responsive to receipt of a third command containing a fourth address by storing that fourth address in association with the other of the first and second addresses.

Preferably, the means responsive to receipt of a second command and the means responsive to receipt of a third command are together constituted by a single means arranged to retrieve the third address and the fourth address from a single command constituting the second command and the third command.

In accordance with a second aspect of the present invention there is provided a controller for controlling a packet switching network for establishing a route from a first interface unit at which packets are to be received from a first neighbouring packet switching network to a second interface unit at which those packets are to be forwarded to a second neighbouring packet switching network, the controller comprising:
means responsive to receipt from a first neighbouring controller associated with that first neighbouring network of a call setup message containing a source address associated with an interface unit, hereinafter the route source address, and a globally unique identity of a desired destination terminal for sending a query message to a name resolution system to obtain information enabling the controller to determine that second interface unit;
means responsive to receipt of said call setup message for sending to that second interface unit a command for it to reserve from sets of dynamically re-usable addresses, respectively associated with the network and with that second neighbouring network, an address to be used as a destination address for packets to be sent from the first interface unit, hereinafter the route destination address, and an address to be used as a source address for packets to be forwarded by said second interface unit to that second neighbouring network;
means responsive to receipt of those reserved addresses from that second interface unit for storing those reserved addresses; and
means responsive to receipt of a setup connection request for sending to the first interface unit the route destination address for association with the route source address.

Preferably, the means responsive to receipt of a setup connection request is arranged to send the route destination address to the first interface unit via the first neighbouring controller.

More preferably, the means responsive to receipt of a setup connection request is also arranged to send the route source address to the second interface unit for association with the route destination address.

In accordance with a third aspect of the present invention there is provided a method of establishing, for a transmission session from a source terminal to a desired destination terminal, a route across a first packet switching network from a first interface unit to a second interface unit, the method comprising:
(a) receiving at a network controller associated with the first network, hereinafter the first controller, a call setup message from a controller associated with a second packet switching network neighbouring the first network, hereinafter the second controller, the call setup message containing a first address of the first network and associated with the first interface unit, hereinafter the route source address, and a globally unique identity of a desired destination terminal;
(b) determining from that globally unique identity the identity of that second interface unit from amongst a plurality of such interface units interfacing the first network and a third packet switching network neighbouring the first network;
(c) sending from the first controller to that identified second interface unit a command for it to reserve from sets of dynamically re-usable addresses, respectively of the first network and of the third network, an address to be used as a destination address for packets to be sent from the first interface unit, hereinafter the route destination address, and an address to be used as a source address for packets to be forwarded by said second interface unit to that third neighbouring network, hereinafter the third network source address;
(d) sending from that identified second interface unit to the first controller the respective reserved addresses;
(e) sending to the first interface unit the route destination address for storage thereat in association with the route source address; and
(f) receiving at the second interface unit an address of the third network, constituting a destination address for packets to be forwarded by said second interface unit, hereinafter the third network destination address, for storage thereat in association with the third network source address.

Preferably, the step (e) is performed by the first controller.

Alternatively, the step (e) comprises the substeps of:
(e1) sending the route destination address to the second controller; and
(e2) sending the route destination address from the second controller to the first interface unit.

A method of this third aspect may include the further steps of:
(g) receiving the third network destination address at the first controller; and
(h) sending the third network destination address from the first controller to the second interface unit.

Preferably, there is included the further step of:
(i) sending to the second interface unit the route source address for storage thereat in association with the route destination address.

A preferred embodiment of a packet switching network having a controller of the present invention and interface units of the present invention and operating in accordance with a method of the present invention will be described by way of example with reference to the drawing of which:

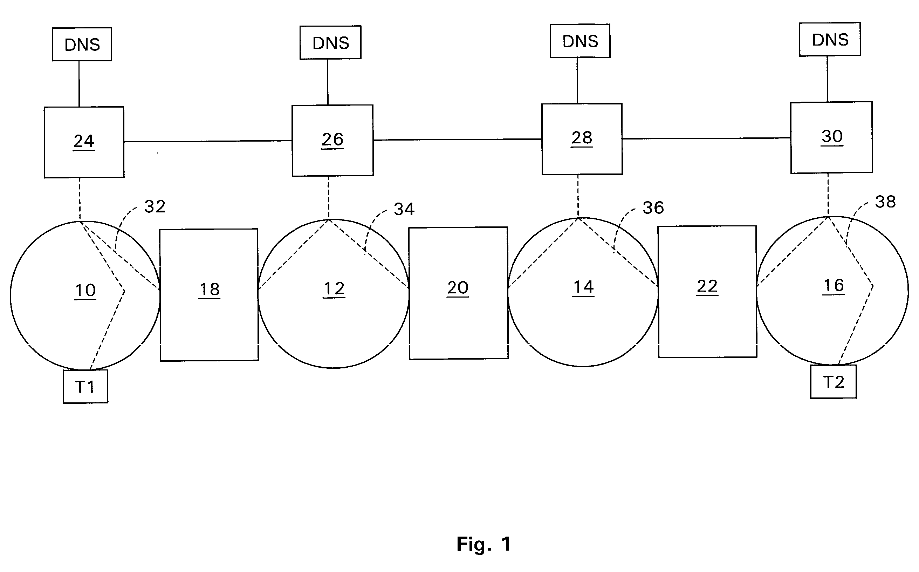

Figure 1 is a schematic diagram of a plurality of packet switching networks interconnected by edge devices.
Acronyms used herein.
- DNS: Domain Name System
- IP: Internet Protocol
- NAT: Network Address Translation
- VPN: Virtual Private Network
- DNS: Domain Name System
- DHCP: Dynamic Host Control Protocol
- MPLS: Multi-Protocol Label Switching protocol
- ITU: International Telecommunication Union
- LDAP: Lightweight Directory Access Protocol
- TCP: Transmission Control Protocol

In Figure 1, a multiplicity of packet switching networks are interconnected at their edges by edge devices, also referred to herein as interface units, for inter-network transport of packets. It will be understood that in practice each of the networks will interface with a plurality of neighbouring, i.e. adjacent, networks, and may be connected to each of its neighbouring networks via more than one such edge device.

For convenience, only four such networks 10, 12, 14 and 16 are shown, and three edge devices 18, 20 and 22. In a first embodiment, all four networks use an address scheme known in the art as IPv4, but each network is effectively a private domain whose address space overlaps with that of one or more of the other networks. This is a known problem with the IPv4 addressing scheme, that the number of available IPv4 addresses falls short of the number of terminals, and therefore it is necessary for addresses used in one network to be re-used in one or more other networks. Thus, at the local level, i.e. within a given network, the IPv4 addresses are unique, but they are not unique at the global level, and it is necessary for the edge devices 18, 20 and 22 to perform network address translation (NAT). The edge devices 18, 20 and 22 are also referred to herein as NAT devices.

The networks 10, 12, 14 and 16 have respective network controllers 24, 26, 28 and 30, and are arranged such as to provide respective virtual private networks (VPN) 32, 34, 36 and 38 for the transport of signalling packets between a controller and its associated edge devices, using the International Telecommunication Union (ITU) signalling protocol known as H.323, modified for the purposes of the present invention, as described below. There are also respective signalling paths between each controller and those of its neighbouring networks. The present invention is not limited to the use of the H.323 signalling protocol, for example one of the signalling protocols within the ITU Q series Recommendations might be used, or TCP/IP.

Edge device 18 has a respective signalling path to controller 24, via VPN 32, and to controller 26, via VPN 34, and correspondingly for all other edge devices. However, as will be described below, when a route is being established through an edge device, that edge device will communicate with only one of its two associated controllers.

A method will now be described of establishing a semi-permanent, unidirectional route for the transmission of packets from a user A associated with a computer terminal T1 having an IPv4 address 10-1 on network 10, to a user B associated with a computer terminal T2 having an IPv4 address 16-2 on network 16. The user A does not know the network address of the user B's terminal T2. Indeed, it could happen that the addresses 10-1 and 16-2 are identical. Accordingly, it is necessary for the user A to know a globally unique identity for the user B. In this embodiment, the globally unique identity is user B's e-mail address. In variants, the globally unique identity is the user B's E.164 number, i.e. a number in accordance with the International Telecommunication Union's Recommendation E.164 (the international public telecommunication numbering plan).

In a first step, user A launches a Call Setup application running on his terminal T1, enters user B's e-mail address, and starts the Call Setup process.

The Call Setup application retrieves from storage the pre-assigned address of the controller 24 on the VPN 32, and sends to the controller 24 a corresponding Call Setup message containing the address of i:he controller 24 in its destination address field, the IPv4 address 10-1 of the terminal T1 in its source address field, and the user B's e-mail address in the relevant data field. It will be understood that such messages will be in the form of packets.

Upon receipt of that Call Setup message, the controller 24 allocates a session ID, retrieves the e-mail address from the data field and sends a Query message to its local DNS name server. The local DNS name server runs a resolver program, as is known in the art, and, if necessary, will send Query messages to its neighbouring DNS name servers to resolve the query. When the query has been resolved, the local DNS name server knows the identity of the neighbouring network (network 12) to, or through, which traffic packets from the terminal T1 will have to go to reach the terminal T2. The local DNS name server now refers to a look-up table to obtain the address of the controller (controller 26) of that neighbouring network (network 12), and the address of an edge device (edge device 18) interfacing that neighbouring network. Where the network 10 interfaces the network 12 via a plurality of edge devices, the local DNS name server will select one of those edge devices on the basis of optimal transmission performance in relation to the terminal T1, as is known in the art.

In a first variant, instead of using a DNS, the controller 24 sends a Query message to a central database in accordance with the known Lightweight Directory Access Protocol (LDAP), and in a second variant, using the above E.164 numbering, the Query message is sent using the known Intelligent Network Applications Protocol (INAP). All of these systems constitute a name resolution system of the present invention.

The controller 24 sends a Reserve Addresses message, constituting a first command of the present invention, containing the session ID, to the edge device 18 for it to reserve from a respective pool of re-usable addresses associated with the edge device 18, a pair of available addresses, one of the pair being an IPv4 address for communication between the edge device 18 and terminals on the network 10, and the other of the pair being an IPv4 address for communication between the edge device 18 and terminals on the network 12. In this example, these are address 10-2, which constitutes a first address of the present invention, and address 12-1, which constitutes a second address of the present invention, respectively. A suitable protocol for this reservation process is dynamic host control protocol, known as DHCP.

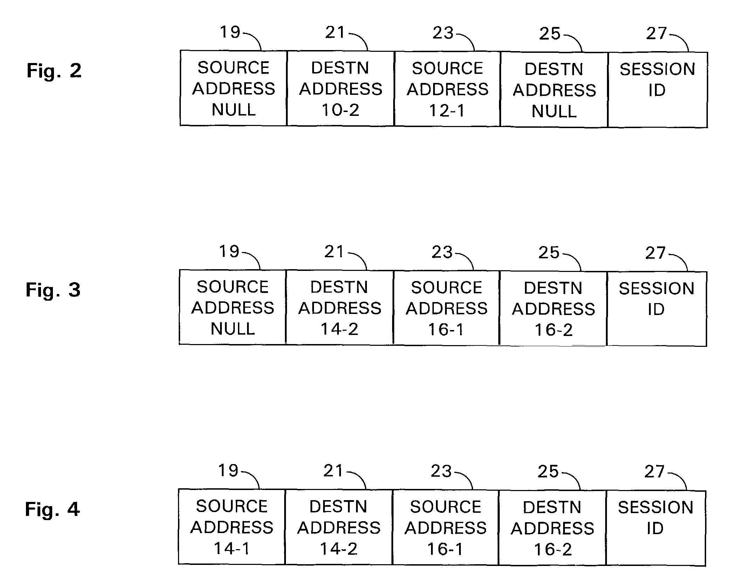

Each of the edge devices has respective sets of storage locations 19, 21, 23, 25 and 27 for each of the number of simultaneous connections that it can handle (only one of the sets of an edge device is shown in Figures 2 to 4). , and the edge device 18 stores Having made that reservation, the edge device 18 now stores the received session ID in storage location 27 of a free set, the reserved addresses 10-2 and 12-1 in storage locations 23 and 25, respectively, as shown in Figure 2, and sends a response message to the controller 24 containing those addresses. The storage locations 23 and 25 at this stage contain null addresses.

The controller 24 stores the addresses 10-2 and 12-1, together with the source address 10-1 of the terminal T1, in association with the session ID, and sends a Call Setup message to the controller 26 containing the user B's e-mail address, the session ID, and the address 12-1 to be used for this route, this address identifies to the controller 26 which of the plurality of edge devices interfacing with the network 10 is the ingress edge device for this route, i.e. the edge device 18.

The controller 26 similarly sends a query message to its local DNS name server and obtains the address of the controller 28 of its neighbouring network 14, and the address of the edge device 20, interfacing that neighbouring network 14. The selection of the edge device 20 from among the plurality of such edge devices interfacing the network 12 with the network 14 is similarly on the basis of optimal performance for packet transmission from the edge device 18. In variants, these addresses are obtained using a procedure of the H.323 signalling protocol known as LRQ (Location Request) and its Location Confirm response.

The controller 26 sends a similar Reserve Addresses message to edge device 20 for it to reserve from its pool of re-usable address, a pair of available addresses, one of the pair being an address for communication between the edge device 20 and terminals on the network 12, and the other of the pair being an address for communication between the edge device 20 and terminals on the network 14. In this example, these are address 12-2 and address 14-1, respectively, and having made that reservation, the edge device 20 now sends a response message to the controller 26 containing those addresses.

The controller 26 stores the addresses 12-2 and 14-1 in association with the session ID, and sends a Call Setup message to controller 28 containing user B's e-mail address, the address 14-1 to be used for this route, and the session ID.

The controller 28 similarly sends a query message to its local DNS name server and obtains the address of the controller 30 of its neighbouring network 16, and, in the same manner as the selection of the edge devices 18 and 20, the address of the edge device 22 interfacing that neighbouring network 16.

The controller 28 sends a similar Reserve Addresses message to the edge device 22 for it to reserve from its associated pool of re-usable addresses, a pair of available addresses, one of the pair being an address for communication between the edge device 22 and terminals on the network 14, and the other of the pair being an address for communication between the edge device 22 and terminals on the network 16. In this example, these are address 14-2 and address 16-1, respectively, and having made that reservation, the edge device 22 now sends a response message to the controller 28 containing those addresses.

The controller 28 stores the addresses 14-2 and 16-1 in association with the session ID, and sends a Call Setup message to the controller 30 containing the user B's e-mail address, the address 16-1 to be used for this route, and the session ID.

Finally, the controller 30 similarly sends a query message to its local DNS name server, but this time obtains the network 16 address 16-2 of the terminal T2.

The controller 30 sends a Call Setup message to the terminal T2 to notify it that a route to it is being set up. The terminal T2 responds with an Acknowledgement message to indicate that it is ready to receive incoming packets.

Upon receipt of that Acknowledgement message, the controller 30 sends a Setup Connection message to the controller 28, containing the address 16-2 and the session ID. The standard H.323 protocol does not contain such a Setup Connection message, and for the purposes of the present invention the protocol would need to be modified by the addition of this Setup Connection message.

The controller 28 responds to receipt of that Setup Connection message by retrieving the address 16-1 associated with that session ID, sending a Store Address message, constituting a second command of the present invention, to the edge device 22, containing that retrieved address 16-1, which constitutes a third address of the present invention, and the received address 16-2. The edge device 22 responds by storing the network address 16-2 in its respective storage location 25 (see Figure 3) as a destination address in association with the reserved address 16-1, and by sending an Acknowledgement message to the controller 28. This Store Address message is also additional to the standard protocol.

In a variant, the Setup Connection message sent from the controller 30 to the controller 28 additionally contains the address 16-1, and the controller 28 directly uses the two received addresses 16-1 and 16-2 instead of retrieving the stored address 16-1, and in a modification of this variant, the controller 28 retrieves the address 16-1 associated with the session ID and as a check compares it with the received address 16-1. In variants where the Setup Connection message includes both these addresses, e.g. addresses 16-1 and 16-2, the session ID may be optionally omitted, and controllers will use these directly without performing any check. In yet another variant, the edge devices store the received session ID in association with the reserved addresses, and the controllers insert the received "N-2" address, and the session ID into the Store Address message and the edge devices use the session ID to associate that that address with the reserved address.

The controller 28 responds to receipt of that Acknowledgement message by sending a Setup Connection message to the controller 26, containing the address 14-2 and the session ID.

The controller 26 responds to receipt of that Setup Connection message by retrieving the address 14-1 associated with that session ID, sending a Store Address message to the edge device 20, containing that retrieved address 14-1 and the received address 14-2. The edge device 20 responds by storing the address 14-2 as a destination address in association with the reserved address 14-1, and by sending an Acknowledgement message to the controller 26.

The controller 26 responds to receipt of that Acknowledgement message by sending a Setup Connection message to the controller 24, containing the address 12-2 and the session ID.

The controller 24 responds to receipt of that Setup Connection message by retrieving the address 12-1 associated with that session ID, sending a Store Address message to the edge device 18, containing that retrieved address 12-1 and the received address 12-2. The edge device 18 responds by storing the address 12-2 as a destination address in association with the reserved address 12-1, and by sending an Acknowledgement message to the controller 24.

The controller 24 now sends a Setup Connection message to the terminal T1, containing the address 10-2 for it to use as the destination address for traffic packets to be sent to the terminal T2.

Thus, a unidirectional route has been established from the terminal T1 to the terminal T2, and the terminal T1 can now start transmitting traffic packets for the terminal T2 by using the destination address 10-2. These traffic packets are received at the edge device 18, where they undergo network address translation, and they are then sent to the destination address 12-2 on the edge device 20. Similarly, in turn, the edge device 20 sends them to the destination address 14-2 on the edge device 22, and the edge device 22 sends them to the address 16-2, i.e. the terminal T2.

For the terminal T2 to send traffic packets to the terminal T1, it can perform the same method for establishing a unidirectional route across the networks to the terminal T1 as is described above, and, for this, the terminal T2 will need to know the user A's e-mail address, or other suitable globally unique identity. The user A's e-mail address can be retrieved from storage within the terminal T1 and included in the Call Setup message sent from the terminal T1 to the controller 24, and correspondingly in the respective Call Setup messages sent from controller to controller, and finally to the terminal T2.

Alternatively, in a variant, the route established from the terminal T1 to the terminal T2 can be made bi-directional. For this, the Call Setup message sent from the controller 30 to the terminal T2 will include the address 16-1. The Store Address message sent from the controller 28 to the edge device 22 will additionally contain the address 14-1, which constitutes a fourth address of the present invention, to be stored in association with the reserved address 14-2. Similarly, the controller 26 will additionally send in its Store Address message to the edge device 20 the address 12-1 to be stored in association with the reserved address 12-2, and the controller 24 will additionally send in its Store Address message to the edge device 18 the address 10-1 to be stored in storage location 29 in association with the reserved address 10-2 (see Figure 4). The Store Address messages of this variant constitute third commands of the present invention.

The edge device 22 uses the stored address 14-1 to maintain stateful data for implementing secure paths between the two networks that it interfaces, and similarly for the other edge devices 18 and 20 in respect of the addresses 10-1 and 12-1, respectively.

Alternatively, in another variant, such a bi-directional route is established from the terminal T1 to the terminal T2 in a different way. As before, the Call Setup message sent from the controller 30 to the terminal T2 will include the address 16-1, but in this variant, when the edge device 18 receives a packet directly from the terminal T1, it retrieves the source address 10-1 and stores it in association with its reserved address 10-2. The edge device 18 will know that it has reserved the addresses 10-2 and 12-1, and can assume that when it receives a packet having address 10-2 as its destination address it is to retrieve the source address, in this case 10-1, and store it in association with that reserved address 10-2. If the controller 24 is permitted to send several Reserve Addresses message to the edge device 18 for respective concurrent connection setup requests, then the edge device 18 will need to be able to determine, for a received packet addressed to one of those several reserved addresses 10-2, etc, which is the correct reserved address, and the use of the session ID would be a convenient way of achieving this.

Similarly, when the edge device 20 receives a packet from the edge device 18, it retrieves the source address 12-1 and stores it in association with its reserved address 12-2, and similarly for the edge device 22. The terminal T2 can send traffic packets to the terminal T1 by addressing them to the address 16-1, and the edge device 22 will perform network address translation and send the traffic packets to the edge device 20, which similarly sends them to the edge device 18, which sends them directly to the terminal T1.

In yet other variants, the edge device 22 (20, 18) can receive the address 14-1 (12-1, 10-1) from the controller 28 (26, 24) in the Reserve Addresses message, or in a separate Store Address message specifically for sending that address 14-1 (12-1, 10-1), i.e. a different Store Address message from the Store Address message which constitutes a second command of the present invention and contains the address 16-1 (14-1, 12-1) and the address 16-2 (14-2, 12-2). In these variants, the Reserve Addresses message and the separate Store Address message each constitutes a third command of the present invention.

In the above embodiment, each edge device is controlled by only one of the two controllers with which it has a signalling link. In a variant, the controller 30 sends a Setup Connection message, constituting a second command of the present invention, to the edge device 22, containing the address 16-2 and the session ID. The edge device 22 responds by identifying the reserved address associated with that session ID, storing the received address 16-2 as a destination address in association with the reserved address 16-1, and by sending an Acknowledgement message to the controller 30. The controller 30 then sends a Setup Connection message to the controller 28, containing the session ID. The controller 28 sends a Setup Connection message to the edge device 20, containing the address 14-2 and the session ID. The edge device 20 responds by identifying the reserved address associated with that session ID, storing the received address 14-2 as a destination address in association with the reserved address 14-1, and by sending an Acknowledgement message to the controller 28, and similarly for controller 26 and edge device 18. Finally, the controller 24 responds to the receipt of the Setup Connection message from controller 26 by sending a Setup Connection message to the terminal T1, containing the address 10-2 for it to use as the destination address for traffic packets to be sent to the terminal T2. For establishing a bi-directional route in such a variant, if the controller 28 has not sent the address 14-1 to the edge device 22 in the Reserve Addresses message, it responds additionally to the receipt of the Setup Connection message from controller 26 by sending to the edge device 22 the above mentioned separate Store Address message containing the address 14-1.

The present invention does not rely on the use of any particular routing or transmission protocols in the networks, and suitable protocols include the known Border Gateway Protocol BGP, and the known multi-protocol label switching (MPLS) protocol.

The communication channels between T1 and T2 can cleared (torn down) when they are no longer required, and this can be achieved in several ways.

In a first way, the terminal T1 sends a Terminate Session message in a packet having destination address 10-2. The edge devices are arranged to monitor the data field (also referred to as the packet's payload) and detect the presence of this message. Thus, when the edge device 18 detects the Terminate Session message, it will release the pair of addresses 10-2 and 12-1 back into its pool of re-usable addresses, delete the contents of the set of storage locations used for that connection (session), and forward the "Terminate Session" packet to the edge device 20, which performs the same operation, and finally the "Terminate Session" packet will be received at the terminal T2, which will communicate the cleared connection to the application which was using that connection.

In another way, the terminal T1 sends the "Terminate Session" packet to the controller 24, which then sends a Release Addresses message together with the corresponding session ID to the edge device 18, and forwards the "Terminate Session" packet to the controller 26, and so on.

In another way, where it is required to tear down only one direction of a bi-directional (full duplex) connection, e.g. where the storage locations all contain addresses, as in Figure 4, the two terminals, T1 and T2, will perform a resolution process, involving the passing of resolution messages between the terminals, to determine which direction is to be cleared. For the connection represented by the set of Figure 4, the resolution process will determine whether storage location 25 is to be overwritten with a null address, i.e. the direction T1 to T2 is torn down, or the storage location 19 is to be overwritten with a null address, i.e. the direction T2 to T1 is torn down.

Quite separate from tear down of the connection initiated by one of the terminals T1, T2, it might be necessary to tear down part of the end-to-end connection, without the knowledge of the controllers, the terminals or the applications being run on the terminals. This might be caused by network optimisation or re-configuration, following a network fault or the movement of a terminal from one network to another, or as the result of Quality of Service (QoS) optimisation. This tear down will be under the control of the edge devices, and will be immediately followed by a re-connection between the edge devices at each end of the torn down route.

Whereas, as described above, the network controller is physically separate from its associated edge devices, the network controller may be combined with one of its associated edge devices, This might be simply integrally housed therewith, or it might be that the control program might be resident in the control processor of that edge device. If distributed computing techniques are employed, the network control function might be distributed among all the edge devices interfacing a network to its neighbouring networks, and in this case each edge device will independently run distributed control processing for both networks that it interfaces.

As described in the above embodiment, the networks 10, 12, 14 and 16 all use IPv4 addresses, and have overlapping address spaces. In another embodiment of the present invention, adjacent pairs of the networks 10, 12, 14 and 16 have different addressing schemes. The networks 10 and 14 use IPv4 addresses, and the networks 12 and 16 use IPv6 addresses, and the edge devices 18, 20 and 22 are arranged to perform network address translation between IPv4 and IPv6.

It will thus be appreciated that the present invention facilitates transmission between terminals where the networks have overlapping address spaces, but that it is not a necessity that the networks do have such overlapping address spaces.

In an extension of the above ideas, the Call Setup message sent to the terminal T2 to notify it that a route to it is being set up includes the session ID, which the terminal T2 stores.

In a first scenario, suppose that the terminal T2 moves from its original place to a new place, and in so doing disconnects from network 16 and connects to network 14. Using DHCP, the terminal T2 makes a request for allocation of an address, and receives from the controller 28 an address 14-3. If the terminal T2 uses a modified form of this request, it can at the same time include the session ID that it stored at call setup. Now, the controller 28 refers to its stored connection details and finds that it has an entry for that session ID, and it knows that it received that session ID from its neighbouring controller 26. The controller 28 sends a Route Optimisation message to the controller 26 containing the session ID and the new destination address 14-3.

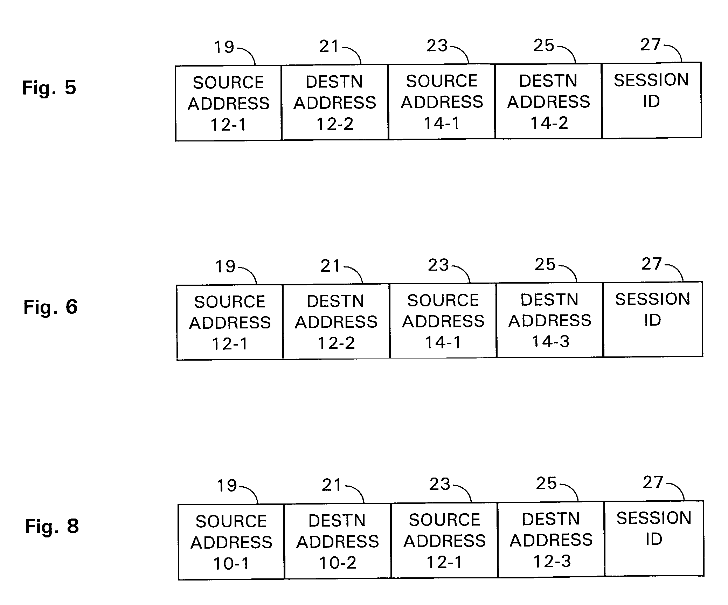

Upon receipt of the Route Optimisation message, the controller 26 sends an Amend Stored Address command to the edge device 20 containing the session ID and the address 14-3. Upon receipt of that Amend Stored Address command, the edge device 20 uses the session ID to locate the storage locations shown in Figure 5, and to amend the destination address to 14-3, as shown in Figure 6. The edge device 20 also forwards that Amend Stored Address command, or any other suitable message, to the terminal T2 at address 14-3, which captures the source address 14-1 for completing the optimised route to the terminal T1.

The controller 26 also sends a Delete Session message to the edge device 22 containing that session ID. Upon receipt of that Delete Session message, the edge device 22 uses the session ID to locate the storage locations shown in Figure 4 and will release the pair of addresses 14-2 and 16-1 back into its pool of re-usable addresses, and delete the contents of the set of storage locations used for that connection.

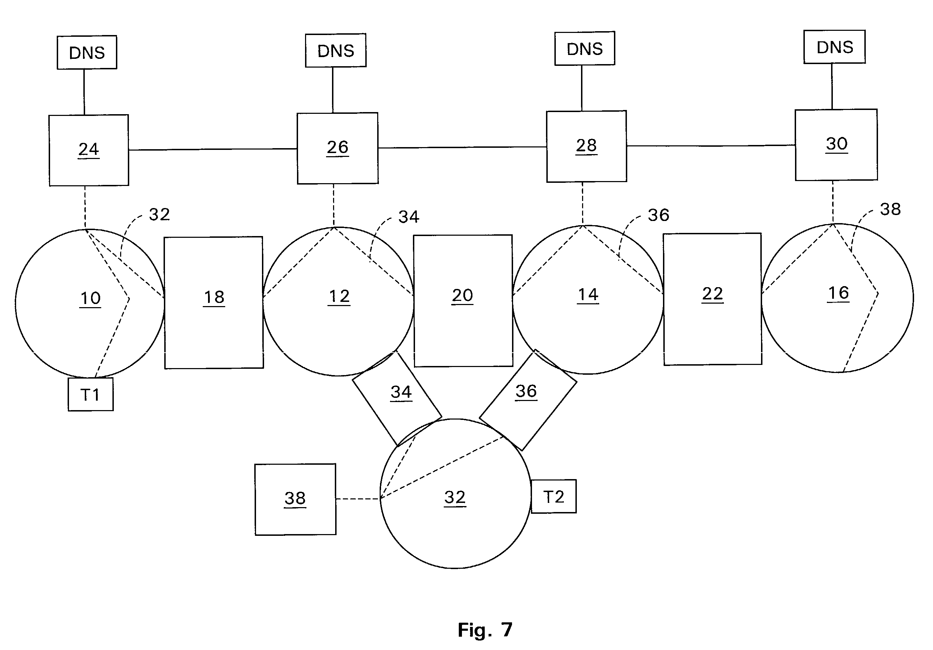

In a second scenario, suppose that the terminal T2 moves from its original place to a new place, and in so doing disconnects from network 16 and connects to network 32, shown in Figure 7, which interfaces with network 12 via edge device 34 and with network 14 via edge device 36 and has a network controller 38 which is connected to at least controllers 26 and 28 via signalling links (not shown).

Using DHCP, the terminal T2 makes a request for allocation of an address, and receives from the controller 38 an address 32-2. If the terminal T2 uses a modified form of this request, it can at the same time include the session ID that it stored at call setup. The controller 38 does not store this session ID, so it makes a request of other controllers to see who might have knowledge of that particular session ID. Several controllers might respond, say the controllers 26 and 28. The controller 38 now knows that it can obtain a connection to an edge device of the original connection, but does not know which of the edge devices 34 and 36 will give optimum routing.

The controller 38 will have received from the terminal T2 the email address for T1 and T2's own email address. The controller 38 now uses the name resolution system in respect of the email address of the terminal T1 to find which of its edge devices 34 and 36 will provide optimum routing to the terminal T1, and ascertains that the edge device 34 is to be used. The controller 38 now sends a Reserve Addresses message, as described above for the initial call setup, to the edge device 34, and sends the returned addresses, including new reserved addresses 12-3 and 32-1, to the controller 26 which responds by requesting controller 24 to update the addresses for that session ID stored in the edge device 18, as shown in Figure 8.

The controller 38 also uses the procedure known as active DNS to update the name resolution system so as to record that the terminal associated with that email address is no longer connected to network 16 but to network 32.

Instead of the controller 38 immediately using the name resolution system, it might notify the terminal T2 that it has no knowledge of that session ID and await receipt of a request for call setup from the terminal T2 in respect of that session ID.

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. An interface unit for use between first and second packet switching networks, the interface unit comprising means responsive to receipt of a first command by reserving for use respective first and second addresses from first and second available address pools respectively associated with the networks and means for sending a response message including the reserved first and second addresses.

2. An interface unit as claimed in claim 1, further comprising means responsive to receipt of a second command containing a third address by storing that third address in association with one of said first and second addresses.

3. An interface unit as claimed in claim 2, further comprising means responsive to receipt of a third command containing a fourth address by storing that fourth address in association with the other of said first and second addresses.

4. An interface unit as claimed in claim 3, wherein said means responsive to receipt of a second command and said means responsive to receipt of a third command are together constituted by a single means arranged to retrieve said third address and said fourth address from a single command constituting said second command and said third command.

5. A controller for controlling a packet switching network for establishing a route from a first interface unit at which packets are to be received from a first neighbouring packet switching network to a second interface unit at which those packets are to be forwarded to a second neighbouring packet switching network, the controller comprising:
means responsive to receipt from a first neighbouring controller associated with that first neighbouring network of a call setup message containing a source address associated with an interface unit, hereinafter the route source address, and a globally unique identity of a desired destination terminal for sending a query message to a name resolution system to obtain information enabling the controller to determine that second interface unit;
means responsive to receipt of said call setup message for sending to that second interface unit a command for it to reserve from sets of dynamically re-usable addresses, respectively associated with the network and with that second neighbouring network, an address to be used as a destination address for packets to be sent from the first interface unit, hereinafter the route destination address, and an address to be used as a source address for packets to be forwarded by said second interface unit to that second neighbouring network;
means responsive to receipt of those reserved addresses from that second interface unit for storing those reserved addresses; and
means responsive to receipt of a setup connection request for sending to the first interface unit the route destination address for association with the route source address.

6. A controller as claimed in claim 5, wherein the means responsive to receipt of a setup connection request is arranged to send the route destination address to the first interface unit via the first neighbouring controller.

7. A controller as claimed in claim 6, wherein the means responsive to receipt of a setup connection request is also arranged to send the route source address to the second interface unit for association with the route destination address.

8. A method of establishing, for a transmission session from a source terminal to a desired destination terminal, a route across a first packet switching network from a first interface unit to a second interface unit, the method comprising:
(a) receiving at a network controller associated with the first network, hereinafter the first controller, a call setup message from a controller associated with a second packet switching network neighbouring the first network, hereinafter the second controller, the call setup message containing a first address of the first network and associated with the first interface unit, hereinafter the route source address, and a globally unique identity of a desired destination terminal;
(b) determining from that globally unique identity the identity of that second interface unit from amongst a plurality of such interface units interfacing the first network and a third packet switching network neighbouring the first network;
(c) sending from the first controller to that identified second interface unit a command for it to reserve from sets of dynamically re-usable addresses, respectively of the first network and of the third network, an address to be used as a destination address for packets to be sent from the first interface unit, hereinafter the route destination address, and an address to be used as a source address for packets to be forwarded by said second interface unit to that third neighbouring network, hereinafter the third network source address;
(d) sending from that identified second interface unit to the first controller the respective reserved addresses;
(e) sending to the first interface unit the route destination address for storage thereat in association with the route source address; and
(f) receiving at the second interface unit an address of the third network, constituting a destination address for packets to be forwarded by said second interface unit, hereinafter the third network destination address, for storage thereat in association with the third network source address.

9. A method as claimed in claim 8, wherein the step (e) is performed by the first controller.

10. A method as claimed in claim 8, wherein the step (e) comprises the substeps of:
(e1) sending the route destination address to the second controller; and
(e2) sending the route destination address from the second controller to the first interface unit.

11. A method as claimed in claim 8, including the further steps of:
(g) receiving the third network destination address at the first controller; and
(h) sending the third network destination address from the first controller to the second interface unit.

12. A method as claimed in any one of claims 8 to 11, including the further step of:
(i) sending to the second interface unit the route source address for storage thereat in association with the route destination address.

13. An interface unit for use between first and second packet switching networks, the interface unit being substantially as herein described with reference to the drawing.

14. A controller for controlling a packet switching network for establishing a route from a first interface unit at which packets are to be received from a first neighbouring packet switching network to a second interface unit at which those packets are to be forwarded to a second neighbouring packet switching network, the controller being substantially as herein described with reference to the drawing.

15. A method of establishing, for a transmission session from a source terminal to a desired destination terminal, a route across a first packet switching network from a first interface unit to a second interface unit, the method being substantially as herein described with reference to the drawing.
